# DEMANDE DE BREVET EUROPEEN

(11) **EP 1 320 227 A2**
(43) Date de publication de la demande: **18.06.2003**
(21) Numéro de dépôt: 02080091.8
(22) Date de dépôt: 05.12.2002
(51) Int. Cl.: H04L 12/56

(54) **Dispositif de commutation comportant une voie de référence en tension commune**

(30) Priorité: 11.12.2001 FR 0115975
(71) Demandeur: Koninklijke Philips Electronics N.V., 5621 BA Eindhoven (NL)
(72) Inventeur: Barre, Philippe, 75008 Paris (FR); Clamagirand, Sébastien, 75008 Paris (FR); Lecacheur, Nicolas, 75008 Paris (FR)
(74) Mandataire: de la Fouchardière, Marie-Noelle

(57) **Abrégé**

L'invention concerne un dispositif de commutation comportant une pluralité d'entrées et de sorties reliées entre elles par une matrice de points d'interconnexion pour transmettre des signaux électriques émis sur lesdites entrées vers lesdites sorties via des lignes de transmission selon un plan de commutation prédéfini. Chaque ligne de transmission comporte une voie de signal pour transporter les signaux électriques et une voie de référence en tension. Les points d'interconnexion sont arrangés dans la matrice de sorte que deux lignes de transmission distinctes comportent une voie de référence en tension commune.

## Description

L'invention concerne les circuits intégrés dédiés aux transmissions à haut débit. En particulier, elle concerne un dispositif de commutation comportant une pluralité d'entrées et de sorties reliées entre elles par une matrice de points d'interconnexion commandée par un organe de contrôle pour transmettre des signaux électriques émis sur lesdites entrées vers lesdites sorties via des lignes de transmission selon un plan de commutation prédéfini, chaque ligne de transmission comportant une voie de signal pour transporter lesdits signaux électriques et une voie de référence soumise à une tension donnée, dite voie de référence en tension.

L'invention concerne aussi un circuit intégré comportant un tel dispositif. Elle concerne également un système de transmissions numériques comportant un autocommutateur incorporant un dispositif de commutation pour relier une pluralité d'émetteur et de récepteurs entre eux. Elle concerne enfin un autocommutateur d'un système de transmissions numériques.

L'invention a de nombreuses applications notamment dans les systèmes de transmissions par liaisons optiques. Elle est particulièrement avantageuse dans les applications de commutation de paquets à haut débit.

Les circuits intégrés utilisés dans les transmissions optiques véhiculent des signaux électriques à des débits élevés, par exemple de l'ordre d'une dizaine de Gigabits par seconde. A ces vitesses de transmission, les liaisons entre les entrées et les sorties du circuit subissent des pertes en ligne non négligeables qui ont une influence néfaste sur les performances du circuit. Toute réduction de la taille du circuit et donc du nombre et de la longueur de ces liaisons contribue à améliorer les performances du circuit en diminuant les pertes en ligne. Ces effets sont encore plus remarquables dans les applications à haut débit, du fait que les lignes de transmission sont traversées par des courants à haute fréquence, ce qui produit un effet particulier, connu sous le nom d'effet de peau, augmentant la résistivité des matériaux utilisés.

Le brevet européen publié sous le numéro EP 1 014 625 décrit un dispositif de commutation du genre mentionné dans le paragraphe introductif destiné à optimiser le rapport entre la taille de la matrice de commutation et sa capacité en nombre d'entrées et de sorties. Le dispositif comporte une pluralité de cellules de commutation arrangées en cascade pour former un réseau matriciel multi-étages dans lequel chaque cellule de commutation comporte deux entrées et deux sorties. Les cellules sont interconnectées en cascade sur plusieurs niveaux ou étages de commutation de manière à ce que toute entrée d'une cellule quelconque puisse être commutée sur toute sortie d'une autre cellule quelconque, via un ou plusieurs étages de commutation, selon le plan d'interconnexion de la matrice. La matrice de commutation multi-étages tel que prévu dans le brevet cité ci-dessus est relativement complexe à réaliser et à commander du fait qu'il n'existe pas de liaison unique directe entre toutes les entrées et toutes les sorties de la matrice. La réalisation, le contrôle et la programmation d'une telle matrice, lorsqu'elle est utilisée, par exemple, dans des applications de commutation de paquets à haut débit, est assez complexe à mettre en oeuvre. De plus, la construction d'une telle matrice en cascades de plusieurs étages est préjudiciable pour les performances du circuit, notamment en terme de gigue.

Un objet de l'invention est de fournir un dispositif de commutation ayant un encombrement réduit pour des applications à haut débit, qui soit plus performant et plus simple à réaliser et à commander que le dispositif décrit dans le brevet déjà cité. L'invention modifie l'agencement des différents composants de la matrice pour réutiliser certains composants déjà présents en les adaptant de manière à obtenir, du fait de la répétition de ces composants dans la matrice, une réduction notable de l'espace total occupé par la matrice.

Pour cela, il est prévu un dispositif du genre mentionné dans le paragraphe introductif remarquable en ce que les points d'interconnexion sont arrangés dans la matrice de sorte que deux lignes de transmission distinctes comportent une voie de référence en tension commune. Cette configuration permet d'économiser au moins l'espace occupé par une voie de référence en tension autant de fois qu'il y a de paires de sorties dans la matrice.

Selon un mode de réalisation particulier, il est prévu que les points d'interconnexion sont arrangés en paires de points d'interconnexion de sorte que deux paires adjacentes aient une voie de référence en tension commune.

Selon un autre mode de réalisation de l'invention, l'organe de contrôle est prévu pour contrôler le fonctionnement de la matrice au moyen de signaux de contrôle prédéterminés selon le plan de commutation, de sorte qu'à un instant donné, une sortie ne puisse être connectée qu'à une seule desdites entrées par un point d'interconnexion unique placé dans un premier état de commutation, dit état actif, sous la commande de l'organe de contrôle. Tous les autres points d'interconnexion susceptibles de connecter d'autres entrées sur ladite sortie étant placés dans un deuxième état de commutation, dit état inactif. Des moyens de décodage sont prévus pour décoder lesdits signaux de contrôle et pour en déduire l'état de commutation desdits points d'interconnexion. Selon ce mode de réalisation, les moyens de décodage comportent une pluralité de décodeurs associés aux points d'interconnexion pour effectuer un décodage local desdits signaux de contrôle au niveau desdits points d'interconnexion. Le décodage local des signaux de contrôle permet de réduire le nombre de liaisons de contrôle nécessaires entre l'organe de contrôle et les points d'interconnexion, ce qui diminue d'autant l'espace occupé par ces liaisons de contrôle.

Selon encore un autre mode de réalisation de l'invention, il est prévu d'utiliser un seul décodeur local ayant 2 sorties, associé à des moyens d'inversion, par paire de points d'interconnexion d'une même cellule complexe, le décodeur unique étant plus simple et plus petit que la somme des décodeurs utilisés selon l'ancienne configuration. Les deux points d'interconnexion formant ladite paire étant connectables à une même sortie de la matrice. Ce qui revient à utiliser une seule paire de décodeurs par cellule complexe de quatre points d'interconnexion au lieu de 4 décodeurs (un par point d'interconnexion). L'espace utilisé par les deux décodeurs supprimés peut alors être économisé.

Les modes de réalisation suivants, donnés à titre d'exemples non limitatifs pour illustrer comment l'invention peut être réalisée, sont décrits en regard des dessins ci-annexés, parmi lesquels :
- la figure 1 est un schéma fonctionnel pour illustrer un exemple de dispositif selon un premier mode de réalisation de l'invention,
- la figure 2 est un schéma fonctionnel pour illustrer un exemple de dispositif selon un deuxième mode de réalisation de l'invention,
- la figure 3 est un schéma de principe pour illustrer une ligne de transmission utilisée dans un dispositif selon l'invention,
- la figure 4 est un schéma fonctionnel pour illustrer un exemple de réalisation d'une cellule complexe d'un dispositif selon l'invention,
- la figure 5 est un schéma fonctionnel pour illustrer un exemple de réalisation préféré d'un dispositif selon l'invention,
- la figure 6 est un schéma fonctionnel pour illustrer un exemple de réalisation d'un décodeur local dans un dispositif selon l'invention,
- la figure 7 est un schéma fonctionnel pour illustrer un exemple d'application de l'invention.

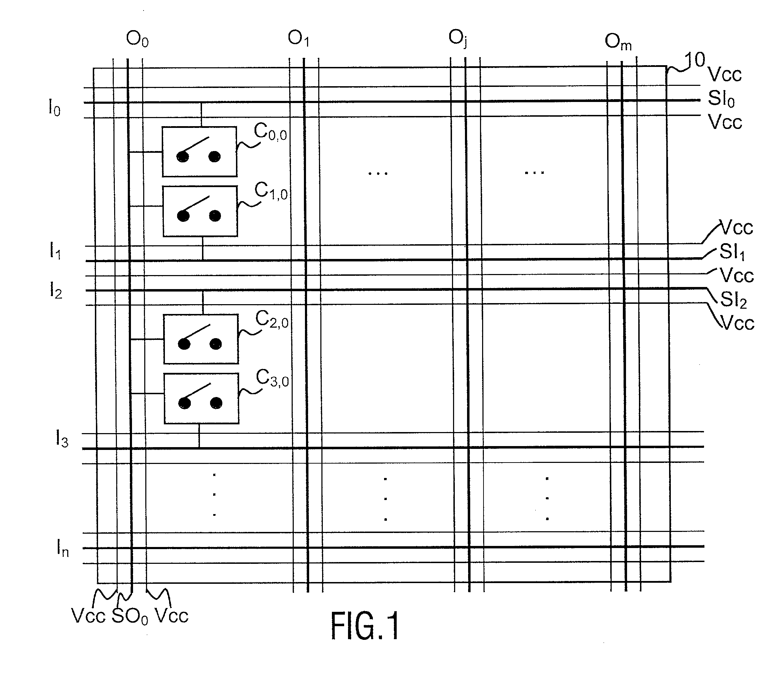

La figure 1 montre un exemple de dispositif de commutation selon l'invention. Il comporte une matrice rectangle 10, de type n x m, n représentant le nombre d'entrées, notées I₀ à Iₙ, et m le nombre de sorties de la matrice, notées O₀ à Oₘ. Chaque entrée et chaque sortie sont reliées à une ligne de transmission distincte. Les lignes de transmission sont interconnectées au niveau de points d'interconnexion formant des cellules de commutation de la matrice, notés C₀₀ à Cₙₘ, le premier indice faisant référence à l'indice de l'entrée I₀ à Iₙ et le deuxième indice faisant référence à l'indice de la sortie correspondante O₀ à Oₘ. Chaque ligne de transmission d'indice i ou j, en entrée ou en sortie de la matrice, se compose d'une voie de signal, notée SIᵢ ou SOⱼ, respectivement, pour transporter un signal électrique depuis une entrée Iᵢ ou vers une sortie Oⱼ de la matrice et d'une voie de référence, notée Vcc, soumise à une tension de référence, par exemple la tension d'alimentation Vcc à 2,5 Volts. La voie de référence en tension Vcc peut, par exemple, servir de voie de retour au signal transmis sur la voie de signal Sⱼ correspondante. Elle peut également avoir d'autres usages, et servir, notamment, comme blindage électromagnétique et/ou voie d'alimentation. Les points d'interconnexion ou cellules de commutation C_{i,j} ont pour fonction de commuter la voie de signal SIᵢ correspondant à l'entrée Iᵢ sur la voie de signal SOⱼ correspondant à la sortie Oⱼ. Pour simplifier, les points d'interconnexion sont représentés sur la figure 1 par des commutateurs simples à deux états. Mais le type de commutateur utilisé pour exercer la fonction des points d'interconnexion n'est pas limité au commutateur C_{i,j} représenté sur la figure 1. Dans le même but de simplification des figures, les voies de signal sont représentées par une ligne simple. Pour des applications de transmissions optiques, chaque voie de signal peut être constituée de deux voies différentielles parallèles distinctes. Le principe de l'invention tel que décrit en référence à toutes les figures reste valable dans le cas de lignes de transmission différentielles.

Selon ce principe, les points d'interconnexion C_{i,j} sont arrangés dans la matrice de sorte que deux lignes de transmission distinctes comportent une voie de référence en tension commune Vcc. Dans la figure 1, les cellules de commutation C_{0,0} et C_{1,0} d'une part et C_{2,0} et C_{3,0} d'autre part, connectables à une même ligne de transmission de sortie, SO₀, sont regroupées par paires de façon à ce que les lignes de transmission correspondant aux deux entrées de la matrice d'indices successifs I₁ et I₂, soient disposées côte à côte. Une seule et même voie de référence en tension Vcc est prévue entre les voies de signal correspondantes SI₁ et SI₂. Cette voie de référence en tension peut, notamment, servir de voie de retour commune aux deux voies de signal SI₁ et SI₂. Cela permet d'économiser la place nécessaire pour une voie de référence ainsi que la place d'un espace entre lignes à chaque fois que deux paires de points d'interconnexion sont ainsi associées. La même configuration peut être reproduite au niveau des lignes de transmission correspondant aux entrées suivantes, par exemple, en utilisant une voie de référence en tension commune pour les lignes de transmissions correspondant aux entrées I3 et I4, puis I5 et I6 et ainsi de suite Le même principe s'applique également dans l'autre dimension de la matrice en regroupant par paires des points d'interconnexion du type C_{i,j} et C_{i,j+1} d'une part et C_{i,j+2} et C_{i,j+3} d'autre part, connectables à une même ligne de transmission d'entrée de type SIᵢ et à des sorties d'indices successifs SOⱼ et SOⱼ₊₁ d'une part et SOⱼ₊₂ et SOⱼ₊₃, d'autre part.

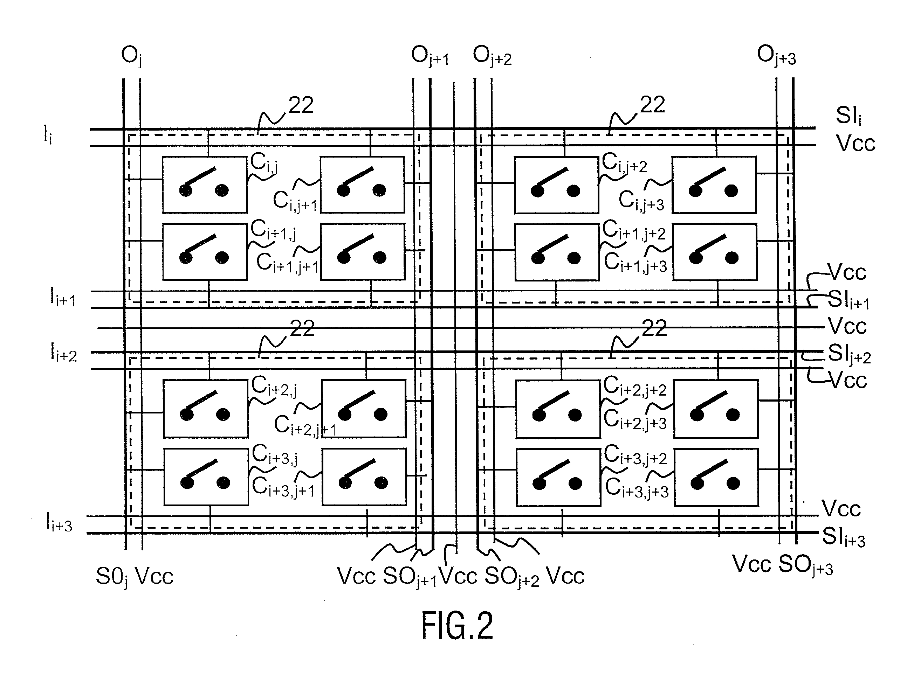

Selon un mode de réalisation préféré de l'invention schématisé à la figure 2, les points d'interconnexion sont regroupés en cellules complexes 22 de quatre points d'interconnexion, de sorte que deux cellules adjacentes 22 ont une voie de référence en tension commune. La figure 2 ne représente qu'une partie de la matrice de commutation comportant quatre cellules complexes adjacentes. Selon ce mode de réalisation avantageux, le principe de l'invention est appliqué dans les deux dimensions de la matrice, au niveau des lignes de transmission d'entrée et de sortie. Les mêmes éléments portent les mêmes référence que sur la figure 1. La mise en commun d'une voie de référence Vcc est ici réalisée entre deux lignes de transmission reliées à deux sorties successives ainsi qu'entre deux lignes de transmission reliées à deux entrées successives de la matrice. Cette configuration en cellules complexes de 4 points d'interconnexion permet de gagner la place d'une voie de référence ainsi qu'un espace entre lignes, pour chaque cellule complexe, dans les deux dimensions de la matrice.

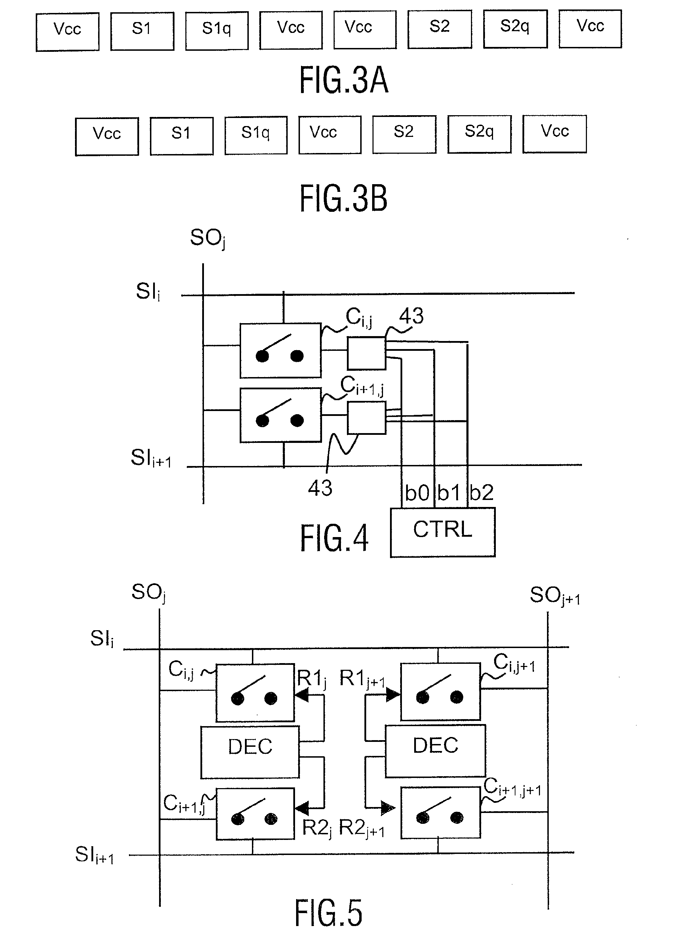

La figure 3A est une représentation schématique en coupe d'une paire de lignes de transmission pouvant être utilisées dans une matrice de commutation. Comme déjà mentionné, les signaux véhiculés dans les transmissions optiques sont des signaux différentiels en opposition de phase. C'est-à-dire qu'une voie de signal d'une ligne de transmission est en fait constituée de deux composantes différentielles parallèles pour transporter le signal différentiel. Le principe de la matrice décrit en référence aux figures précédentes est conservé, sauf qu'une voie de signal est en réalité constituée de deux voies différentielles parallèles. Chaque ligne de transmission comporte donc deux voies différentielles S et Sq pour transporter le signal et une voie de référence en tension ou voie de retour Vcc. En notant A l'espace occupé par une composante d'une voie de signal différentiel, B l'espace occupé par une voie de référence en tension Vcc, A' l'espace entre deux voies de signal, B' l'espace entre une voie de signal et une voie de référence en tension et C l'espace entre deux voies de référence en tension, l'encombrement total résultant pour une paire de lignes de transmission différentielles successives agencées selon la figure 3A correspond à 4(A+B+B')+2A'+C.

La figure 3B illustre une paire de lignes de transmission différentielles arrangées selon l'invention telle qu'illustrée, par exemple, aux figures 1 et 2. Les mêmes références sont utilisées pour indiquer les mêmes éléments. La voie de référence en tension Vcc est commune aux deux lignes de transmission différentielles successives, ce qui permet de réduire l'encombrement total des deux lignes de transmission. En effet, en utilisant les mêmes notations que pour la figure 3A, on obtient un encombrement total de 4A+2A'+3B+4B', soit une réduction égale à B+C. Le gain de place réalisé par la suppression d'une voie de référence en tension par paire de lignes de transmission est estimée à au moins environ 10 % de l'espace utilisé selon chaque dimension de la matrice.

La figure 4 illustre une partie d'un dispositif selon un mode de réalisation particulier de l'invention. La moitié d'une cellule complexe 22 illustrée à la figure 2 est représenté sur la figure 4. Cette moitié correspondant à deux points d'interconnexion ou cellules de base C_{i,j} et C_{i+1,j} associés à une même ligne de transmission en sortie. Un organe de contrôle CTRL est prévu pour contrôler le fonctionnement de la matrice au moyen de signaux de contrôle prédéterminés selon ledit plan de commutation prédéfini. A un instant donné, une sortie ne peut être connectée qu'à une seule entrée par un point d'interconnexion unique placé dans un premier état de commutation, dit état actif, sous la commande de l'organe de contrôle CTRL, tous les autres points d'interconnexion susceptibles de connecter d'autres entrées sur cette même sortie étant placés dans un deuxième état de commutation, dit état inactif. Des moyens de décodage 43 sont prévus pour décoder les signaux de contrôle et en déduire l'état de commutation des points d'interconnexion. Les moyens de décodage 43 comportent des décodeurs locaux associés aux points d'interconnexion pour réaliser un décodage local des signaux de contrôle envoyés par l'organe de contrôle au niveau des points d'interconnexion. Dans l'exemple illustré, les signaux de contrôle sont des signaux binaires et les décodeurs 43, des décodeurs binaires. Les décodeurs binaires 43 sont reliés à l'organe de contrôle par des liaisons binaires distinctes des lignes de transmission pour transporter les signaux de contrôle binaires depuis l'organe de contrôle CTRL jusqu'aux décodeurs binaires 43. Dans l'exemple illustré à la figure 4, un nombre N de liaisons binaires distinctes partant de l'organe de contrôle sont prévues pour contrôler un nombre de points d'interconnexion égal au maximum à 2^{N}. Dans cet exemple, N=3.

Selon un mode de réalisation particulièrement avantageux de l'invention illustré à la figure 5, une paire de décodeurs binaires DEC est associée à deux paires de points d'interconnexion. La première paire de points comporte les points C_{i,j} et C_{i+1,j}. La deuxième paire comporte les points C_{i,j+1} et C_{i+1,j+1}. chaque décodeur DEC comporte toujours N entrées (non représentées) mais cette fois les décodeurs binaires comportent 2 sorties pour décoder les signaux de contrôle reçus sur les N liaisons binaires à destination des 2 points d'interconnexion de chaque paire correspondante. Chaque décodeur en déduit un premier résultat R1ⱼ et R1ⱼ₊₁, respectivement, destiné à commander le premier point d'interconnexion de chaque paire. Les décodeurs comportent en outre des moyens d'inversion (non représentés) pour inverser le signal de contrôle sur au moins l'une des N liaisons binaires par rapport au signal de contrôle utilisé pour fournir le premier résultat. Chaque décodeur obtient ainsi un deuxième résultat R2ⱼ et R2ⱼ₊₁, respectivement, destiné à commander le deuxième point d'interconnexion de la paire correspondante. Pour des raisons de clarté des figures, ni les liaisons de contrôle ni l'organe de contrôle CTRL ne sont représentés sur la figure 5. Ces liaisons sont cependant présentes pour chaque paire de points d'interconnexion, entre chaque décodeur DEC associé à une paire de points d'interconnexion et l'organe de contrôle CTRL, tel qu'illustré à la figure 4.

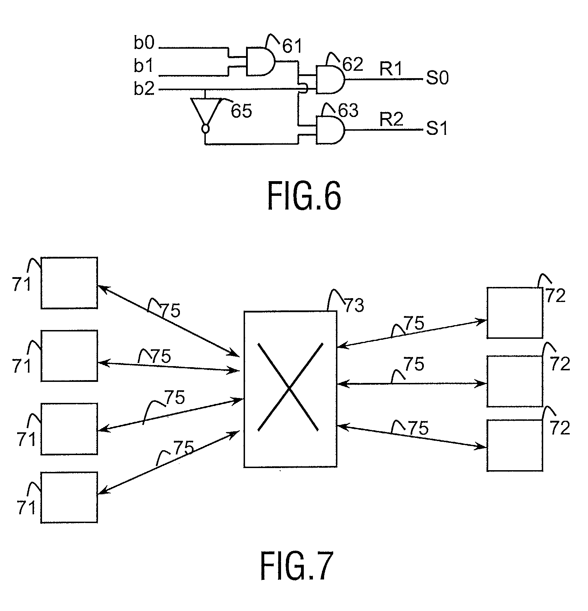

La figure 6 illustre, à titre purement indicatif et non restrictif, un exemple de réalisation d'un décodeur DEC représenté à la figure 5. Le décodeur comporte deux étages de portes logiques ET, notées 61 à 63, pour relier 3 entrées, notées b0, b1 et b2, à deux sorties, notées S0 et S1. Les 3 entrées b0, b1 et b2, sont reliées à l'organe de contrôle (non représenté) via les N liaisons de contrôle illustrées à la figure 4. Les 2 sorties S0 et S1, sont destinées à fournir les deux résultats de commande binaires, R1ⱼ ou R1ⱼ₊₁ d'une part, et R2ⱼ ou R2ⱼ₊₁ d'autre part, pour commander une paire de points d'interconnexion C_{i,j} et C_{i+1,j} ou C_{i,j+1} et C_{i+1,j+1}, connectable, via une ligne de transmission, à une même sortie de la matrice de commutation, Oⱼ ou Oⱼ₊₁, selon l'exemple illustré à la figure 5. Deux entrées b0 et b1 sont connectées en entrée d'une première porte ET 61 dont la sortie est envoyée en entrée d'une deuxième et d'une troisième porte ET 62 et 63, respectivement. La troisième entrée b2 est reçue en entrée de la deuxième porte ET 62 pour fournir, en réalisant un ET logique avec la sortie de la première porte ET 61, un premier résultat de commande R1 à destination du premier point d'interconnexion C_{i,j}. Des moyens d'inversion 65 sont prévus pour inverser le signal reçu sur la troisième entrée b2 et pour fournir en entrée de la troisième porte ET 63 ledit signal inversé par rapport au signal envoyé en entrée de la deuxième porte ET 62 et pour en déduire, en réalisant un ET logique avec la sortie de la première porte ET 61, le deuxième résultat de commande R2 à destination du deuxième point d'interconnexion C_{i+1,j}. Bien que cela n'apparaisse pas sur les figures 4 à 6 qui ne sont pas réalisées à l'échelle, un tel décodeur DEC à deux sorties tel qu'illustré aux figures 5 et 6 est moins encombrant que la somme des deux décodeurs 43 représentés à la figure 4.

Un dispositif tel qu'illustré sur les figures 1 à 6 peut être incorporé dans un circuit intégré, pour être utilisé, notamment, dans un autocommutateur d'un réseau de télécommunications tel que représenté sur la figure 7. La figure 7 représente un exemple de système de télécommunications numériques selon l'invention. Le système comporte un émetteur 71, un récepteur 72, un autocommutateur 73 comportant un dispositif de commutation du type représenté aux figures 1 à 5 et des liaisons par fibres optiques 75 pour relier l'émetteur 71 et le récepteur 72 via l'autocommutateur 73.

## Revendications

1. Dispositif de commutation comportant une pluralité d'entrées et de sorties reliées entre elles par une matrice de points d'interconnexion commandée par un organe de contrôle pour transmettre des signaux électriques émis sur lesdites entrées vers lesdites sorties via des lignes de transmission selon un plan de commutation prédéfini, chaque ligne de transmission comportant une voie de signal pour transporter lesdits signaux électriques et une voie de référence soumise à une tension donnée, dite voie de référence en tension, **caractérisé en ce que** lesdits points d'interconnexion sont arrangés dans la matrice de sorte que deux lignes de transmission distinctes comportent une voie de référence en tension commune.

2. Dispositif de commutation selon la revendication 1, dans lequel les points d'interconnexion sont arrangés en paires de deux points d'interconnexion adjacents de sorte que deux paires adjacentes connectables à une même entrée ou une même sortie de la matrice ont une voie de référence en tension commune.

3. Dispositif de commutation selon la revendication 2, dans lequel les points d'interconnexion sont arrangés dans la matrice en cellules de deux paires de points d'interconnexion, une cellule étant connectable à deux entrées successives et à deux sorties successives de la matrice, de sorte que deux cellules adjacentes ont une voie de référence en tension commune.

4. Dispositif selon l'une des revendications 1 à 3, dans lequel l'organe de contrôle est prévu pour contrôler le fonctionnement de la matrice au moyen de signaux de contrôle prédéterminés selon ledit plan de commutation, de sorte qu'à un instant donné, une sortie ne puisse être connectée qu'à une seule desdites entrées par un point d'interconnexion unique placé dans un premier état de commutation, dit état actif, sous la commande de l'organe de contrôle, tous les autres points d'interconnexion susceptibles de connecter d'autres entrées sur ladite sortie étant placés dans un deuxième état de commutation, dit état inactif, des moyens de décodage étant prévus pour décoder lesdits signaux de contrôle et en déduire l'état de commutation desdits points d'interconnexion, **caractérisé en ce que** lesdits moyens de décodage comportent une pluralité de décodeurs locaux associés aux points d'interconnexion pour effectuer un décodage local desdits signaux de contrôle au niveau desdits points d'interconnexion.

5. Dispositif selon la revendication 4, dans lequel les signaux de contrôle sont des signaux binaires et les décodeurs, des décodeurs binaires, **caractérisé en ce que** lesdits décodeurs binaires sont reliés à l'organe de contrôle par des liaisons binaires distinctes des lignes de transmission pour transporter lesdits signaux de contrôle binaires depuis l'organe de contrôle jusqu'auxdits décodeurs binaires, un nombre N de liaisons binaires distinctes partant de l'organe de contrôle étant prévues pour contrôler un nombre de points d'interconnexion égal au maximum à 2^{N}.

6. Dispositif selon la revendication 5, dans lequel lesdits moyens de décodage comportent un décodeur binaire à N entrées et 2 sorties par paire de points d'interconnexion connectables à une même sortie par une même ligne de transmission, pour décoder les signaux de contrôle reçus sur les N liaisons binaires à destination de ladite paire de points d'interconnexion et pour en déduire un premier résultat destiné à commander un premier point d'interconnexion de ladite paire, et des moyens d'inversion pour inverser le signal de contrôle sur au moins l'une des N liaisons binaires reçues par le décodeur par rapport au signal de contrôle utilisé pour fournir ledit premier résultat et pour en déduire un deuxième résultat destiné à commander le deuxième point d'interconnexion de ladite paire.

7. Circuit intégré comportant un dispositif selon l'une des revendications 1 à 6.

8. Système de transmissions numériques comportant une pluralité d'émetteurs et de récepteurs interconnectés entre eux par un autocommutateur, **caractérisé en ce que** l'autocommutateur comporte un dispositif selon l'une des revendications 1 à 6.

9. Autocommutateur d'un système de transmissions numériques comportant une pluralité d'émetteurs et de récepteurs interconnectés entre eux par ledit autocommutateur, dans lequel ledit autocommutateur comporte un dispositif selon l'une des revendications 1 à 6.
